# EUROPEAN PATENT SPECIFICATION

(11) **EP 0 342 372 B1**
(45) Date of publication and mention of the grant of the patent: **08.06.1994**
(21) Application number: 89107012.0
(22) Date of filing: 19.04.1989
(51) Int. Cl.: G03B 1/56, G03B 17/30

(54) **Spool, cartridge and method for fastening a photographic film**
Spule, Kassette und Methode zur Befestigung eines photographischen Films
Bobine, cassette et méthode de fixation d'un film photographique

(30) Priority: 19.05.1988 IT 2063388
(43) Date of publication of application: 23.11.1989
(73) Proprietor: MINNESOTA MINING AND MANUFACTURING COMPANY, St. Paul, Minnesota 55133-3427 (US)
(72) Inventor: Donato, Francesco, I-17016 Ferrania Savona (IT)
(74) Representative: Checcacci, Giorgio

(56) References cited:
- EP-A- 0 045 428
- EP-A- 0 095 148
- EP-A- 0 186 824

## Description

### Field of The Invention

The present invention refers to a method for fastening a photographic film on a winding-up spool in a cartridge and to a cartridge and a winding-up spool made according to said method.

### Background of The Art

A photographic film is normally fastened to the winding-up spool inside a photographic cartridge in two ways: either by applying a strip of adhesive tape or by hooking.

The former way is widely used due to the firm fastening obtained therewith, but has the disadvantage of being rather complicated to be realized.

The latter way, on the contrary, allows a fastening to be made much more easily, but has the disadvantage of a rather limited strength.

It is worth noticing that an insufficient tensile strength may cause the film to unfasten from the spool both in the photographic camera, at the end of exposure, and in the so called automatic splicing machines where the film is spliced to other films prior to being processed.

The first drawback prevents the film from being re-wound in the photographic camera thus causing the whole camera to be taken into a dark room to recover the exposed film.

As regards the second drawback, it is worth stating that inside the splicing machine the film is completely unwound from the cartridge and stretched to be cut as near as possible to the cartridge. After that, inside the cartridge there remains a reduced-width film portion, the so called leader portion, with which the film hooking to the spool had been performed.

If the film, leader portion included, somehow unfastens from the spool when it is stretched before being regularly cut, this is signalled by a suitable alarm; normally however, the apparatus does not stop automatically. The film is therefore all the same spliced to the other film by the apparatus and the leader portion, remained attached to the film, is folded on itself. This causes a remarkable irregularity in the spliced films as a whole and such irregularity causes alterations in the reproduction of images near the splicing point and even breakings or clogging, thus unavoidably stopping the processing and damaging the films.

To avoid such drawbacks, unification standards (ANSI PH1.14M-1983) give a minimum value of tensile strength, to be measured according to a particular procedure, for fastening the film to the spool; precisely, the film must support a load of 89 N (newton) without unfastening from the spool.

Such a value is normally achieved by films fastened with an adhesive tape, while it results very difficult to be obtained with hooked films, in particular at very low temperatures (which, even if not provided by the standards, can be reached under particular situations).

Many studies and attempts have been made to improve the tensile strength of the hooking fastening of the film to the spool.

For instance, European patent application EP-A-77,972 teaches how to improve the tensile strength by combining hooking with compression and gripping of the film, obtained with a very complicated spool having reciprocally moving parts.

European patent application EP-A-95,148 teaches how to improve the tensile strength by accurately designing the hooking means (teeth) in the slit and the holes in the film leader portion corresponding thereto.

European patent application EP-A-186,824 teaches how to improve the tensile strength by rounding as much as possible the inlet mouth of the slit where the film is supported at the beginning of winding.

### Description of The Invention

A preferential breaking region in the film leader portion has been thought to be useful for delimiting a possible breaking in a given region such as to avoid or at least limit the drawbacks of the breaking itself.

The present invention refers therefore to a method for fastening, on a winding-up spool in a cartridge, a photographic film including a full-width main portion and a reduced-width leader portion formed at one end of the film, comprising the steps of:
- introducing the leader portion into a longitudinal slit formed in the spool,
- making an end region of the leader portion provided with hooking holes to hook to hooking means provided in the slit,
- winding up the film on the spool,
characterized by the fact of producing a transversal region of preferential breaking in the leader portion, near the main portion of the film, wherein the tensile strength of the region of preferential breaking is lower than that of the end region of relative weakness in the leader portion, near the main portion of the film.

The preferential breaking region provides a breaking near the full-width main portion of the film in case an accidental breaking occurs in the splicing apparatus. It is therefore anyhow possible to make a splicing correctly since breaking does not occur in the hooking holes region, but in the preferential breaking region, thus avoiding a leader portion remaining attached to the main portion of the film and hindering the splicing.

Since tensile strength problems occur more at low temperatures, the tensile strength in the preferential breaking region is preferably lower than that in the region provided with hooking holes, at a room temperature between -25° and -15°C.

At the purpose of forming the preferential breaking region, when the film is wound up on the spool the leader portion is advantageously stretched and folded on a knife formed on an inlet mouth of the slit in the spool. In cross section the knife comprises a folding portion having a bending radius lower than 0.50 mm, preferably from 0.15 to 0.50 mm, on which the leader portion is folded. Still more preferably, such radius is about 0.20 mm.

Still more preferably, once hooked the leader portion is kept flat in the end region provided with hooking holes to improve the tensile strength in such region.

In a second aspect, the present invention relates to a spool for winding up a film in a cartridge, including a full-width main portion and a reduced-width leader portion formed at one end of the film, comprising a longitudinal slit made in the spool for inserting the leader portion, an inlet mouth of the slit, hooking means formed in the slit to hook at an end region of the leader portion provided with hooking holes, guiding means formed in the slit for guiding the leader portion into the slit, means for producing a transversal region of preferential breaking in the leader portion, near the main portion of the film, said means for producing a transversal region of preferential breaking comprising a knife made on the inlet mouth of the slit, said knife comprising a folding portion having a bending radius in the range from 0.15 to 0.50 mm, on which folding portion the leader portion is stretched and folded while winding-up the film on the spool.

In other words, the present invention refers to a spool and a photographic film hooked and wound-up on said spool, wherein said film comprises a full-width main portion and a reduced-width leader portion formed at one end of the film and provided with hooking holes, and said spool comprises a longitudinal slit provided with an inlet mouth and hooking means and guide means formed in the slit, characterized by said leader portion of the film including a transversal region of preferential breaking near the full-width main portion of the film.

The guide means in the slit are used in the cartridge assembling step to guide the film leader portion, when this is introduced into the slit to be hooked. Such means gradually fold such leader portion while being introduced from the inlet mouth till it is hooked to the hooking means.

Preferably, the bending radius on which the leader portion is folded is equal to about 0.20 mm.

The spool also comprises means to keep the end region of the leader portion, which is provided with hooking holes, flat once hooked. At this purpose, the spool comprises:
- three identical teeth, of which two lateral ones are placed on a slit wall and a central one on the opposite wall, each tooth having a guiding back surface tapered towards the inlet mouth of the slit and a hooking throat in correspondence with a single hooking plane for the three teeth, said teeth constituting at the same time both the hooking means and the guiding means,
- at least three flat support elements, placed beneath the three teeth, tapered towards the inlet mouth of the slit and having a total axial extension equal to at least 60% the slit extension, said support elements constituting the means to keep flat the leader portion provided with hooking holes.

Preferably, the spool comprises two further flat support elements, formed on the wall where there is the central tooth, in an external position with respect to the lateral teeth, the total axial extension of the support elements being in the range from 75 to 85% the slit extension (better if it is equal to about 80%).

Still more preferably, the distance between the flat support elements on one wall and those on the other wall is in the range from 120 to 180% (better if it is equal to about 160%) the thickness of the photographic film.

In a further aspect, the present invention regards a photographic cartridge realized according to the above said method, i.e. a photographic cartridge including a casing element and a photographic film fastened and wound-up on the above said spool.

### List of the Figures

Further characteristics and advantages of the present invention will better result from the following detailed description of a preferred embodiment made with reference to the enclosed drawings. In such drawings:

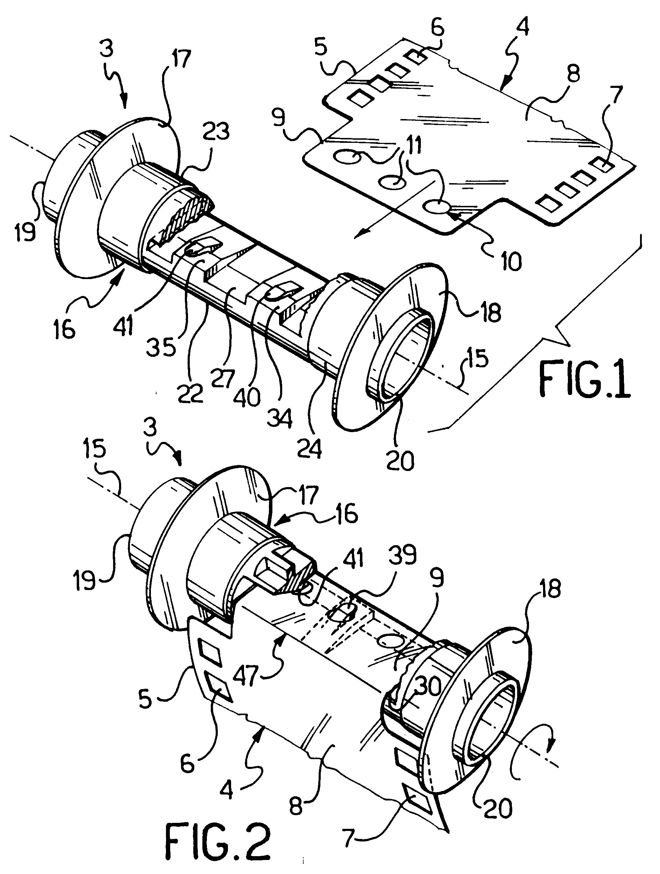

- figure 1 represents a partial section perspective view of a spool and a film for a cartridge according to the present invention, before the film has been hooked to the spool;
- figure 2 represents a view similar to figure 1 with the film hooked to the spool and the spool turned of 180°;

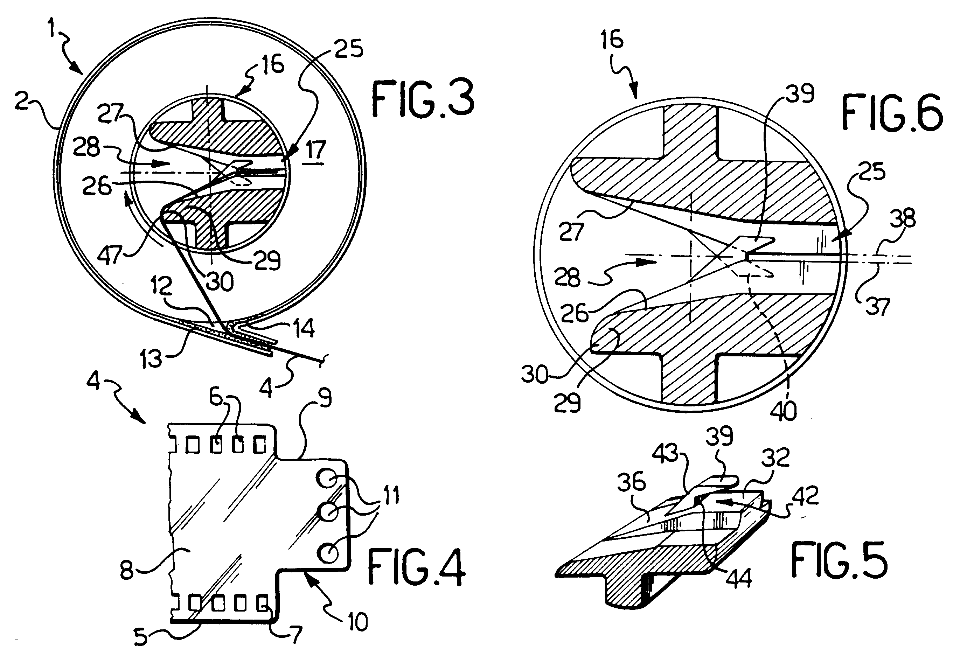

- figure 3 represents a cross section view of the spool of figure 1, introduced into the cartridge, with the film almost completely unwound from the spool;
- figure 4 represents a partial view of the film of the preceding figures;
- figure 5 represents an enlarged perspective view of a detail of the spool of the preceding figures;

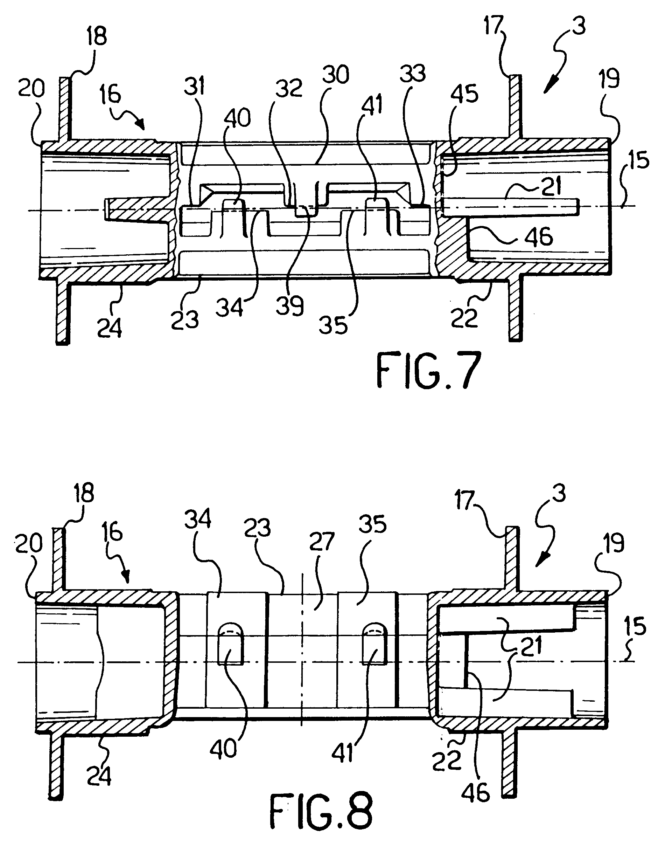

- figure 6 represents a cross section view of the spool of the preceding figures;
- figure 7 represents a partial section lateral view of the spool of the preceding figures;

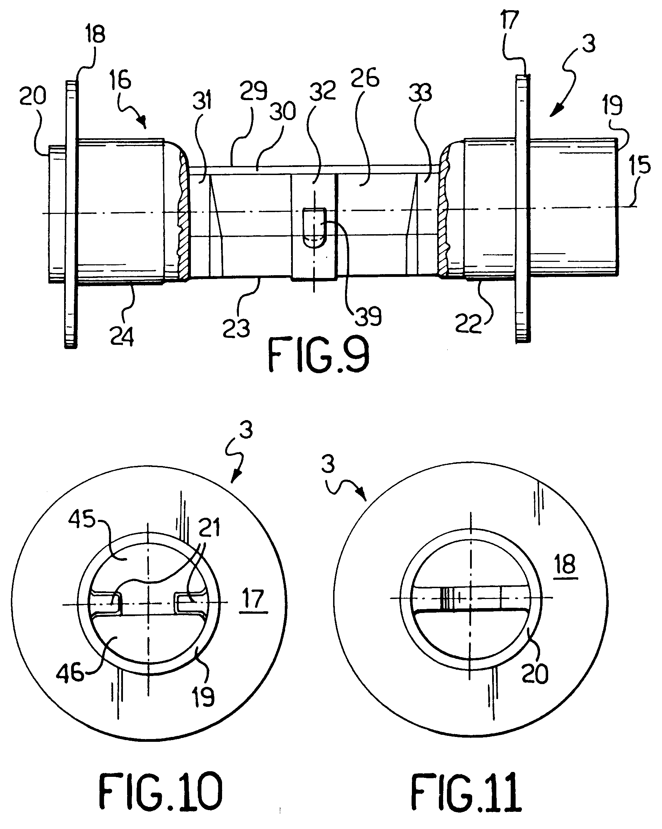

- figures 8 and 9 represent opposite views of the spool of figure 7, opened in correspondence of the slit;
- figures 10 and 11 represent end front views of the spool of the preceding figures;
- figures 12 and 13 represent histograms of the tensile strength of the hooking between film and spool in cartridges obtained according to the present invention, respectively obtained at about +20°C and -20°C.

### Detailed Description of a Preferred Embodiment of the Invention

In the figures, 1 indicates a photographic cartridge as a whole, comprising a casing element 2, a spool 3 introduced into casing element 2 and a photographic film 4 wound up on spool 3.

Film 4 comprises a full-width main portion 5, provided with two sets 6 and 7 of lateral holes and a central portion 8 for image recording. Film 4 comprises then a leader portion 9, having a reduced width with respect to the main portion 5, formed at one end of film 4.

Leader 9 is provided with an end portion 10, in the opposite position with respect to the main portion 5, having three equal round hooking holes 11, circular or preferably elliptical or oval-shaped.

Casing element 2 is substantially cylindrical in shape, enlarged in correspondence with one of its generating lines, where it is provided with an opening 12 for the passage of the film. In such an opening 12 there is provided a light-tight gasket, e.g. a couple of black felts 13 and 14, to prevent light from entering the inside of cartridge 1 thus exposing film 4. Spool 3 is free to rotate inside the casing element 2 around its longitudinal axis 15, following the unwinding and winding-up of film 4 on spool 3 itself.

Spool 3 comprises a substantially cylindrical winding-up core 16 in axial direction delimited by two circular flanges 17 and 18. Two hollow tangs 19 and 20 protrude from flanges 17 and 18, thus substantially prolongating core 16, and are to engage with an external apparatus (such as a photographic camera) to guide and rotate spool 3; the bigger tang 19 is internally provided with a couple of projecting drive ridges 21. The winding-up core 16 has a central portion 22 with a diameter slightly shorter than that of two lateral portions 23 and 24, which actually support film 4 when it is wound-up.

In spool 3 there is a slit 25, lengthwise extending in the direction of axis 15 for a tract slightly shorter than that of central portion 22 of core 16. Slit 25 passes right through winding-up core 16 and is delimited by two opposite walls 26 and 27 diverging towards an inlet mouth 28 of slit 25.

On inlet mouth 28, on the side of its wall 26 and as a substantial prolongation thereof, there is formed a knife 29, i.e. a substantially flat and elongated element extending in the direction of axis 15, comprising a folding portion 30, in cross section, having a very small bending radius, in particular from 0.15 to 0.50 mm, preferably equal to about 0.20 mm; on folding portion 30 leader portion 9 is stretched and folded while winding-up film 4 on spool 3.

In slit 25 there are formed five wide flat supporting elements 31, 32, 33, 34 and 35, alternatively placed on walls 26 and 27, elements 31, 32 and 33 on wall 26 and elements 34 and 35 on wall 27. Supporting elements from 31 to 35 are all provided with respective inclined portions, all indicated with 36, tapered towards inlet mouth 28. The supporting element 32 is in the central position in the direction of axis 15, elements 34 and 35 are lateral, symmetrical with respect to element 32, while elements 31 and 33 are at the extremity and symmetrical with respect to element 32.

Supporting elements 31, 32 and 33 (inclined portions 36 excluded) are reciprocally coplanar along a plane 37, while elements 34 and 35 (terminal portions 36 and 21a excluded) are coplanar along a plane 38, parallel to plane 36. The distance between elements 34 and 35 and elements 31, 32 and 33, defined as the distance between planes 37 and 38, is in the range from 120 to 180% better if equal to 160%) the thickness of the photographic film 4. The whole extension in axial direction of the five supporting elements, defined as the sum of the extensions in the direction of axis 15 of each of the five supporting elements from 31 to 35, is at least equal to 60% the extension of slit 25, preferably between 75 and 85% (better if equal to about 80%).

Supporting elements 31 and 33, placed at the ends of slit 25, may also be absent, in a simplified embodiment of the present invention.

In slit 25, furthermore, there are formed three teeth 39, 40 and 41, respectively on supporting elements 32, 34 and 35; tooth 39, in the central or intermediate position with respect to teeth 40 and 41, results to be formed on wall 26, while teeth 40 and 41, which are lateral with respect to tooth 39, are formed on wall 27.

Each of teeth 39, 40 and 41 is provided with a hooking throat, indicated with 42 for all teeth, and a tapered back surface, indicated with 43 again for all teeth.

Throat 42 of each tooth is shaped so as to have a width decreasing towards a rounded bottom 44 of throat 42 itself; the minimum width of throat 42, in correspondence of bottom 44, is slightly higher than the thickness of the photographic film 4, more precisely in the range from 100% to 120% of such thickness, preferably 105%.

As it can bee seen better hereinafter, teeth 39, 40 and 41 form both hooking means, to hook leader portion 9 of film 4, and guiding means, to fold and guide leader portion 9 to be hooked. Supporting means from 31 to 35 form means to keep flat the end portion 10 provided with hooking holes 11, once hooked to teeth 39, 40 and 41, as it can be better seen hereinafter.

Spool 3 of cartridge 1 is furthermore provided with means for recognizing the position of spool 3 itself with respect to casing element 2 to allow the inlet mouth 28 of slit 25 to be correctly positioned with respect to opening 12 in casing element 2, thus allowing film 4 to be introduced and hooked when cartridge 1 is closed. Such means comprise two regions 45 and 46 having a different depth inside tang 19, in particular two semicircular halves of a circular bottom.

Film 4 is fastened and wound-up on spool 3 in the following way.

Film 4 is introduced with its leader portion 9 into inlet mouth 28 of slit 25.

Film 4 is pushed into slit 25 such that leader portion 9 is guided and progressively (elastically) deformed by supporting planes from 31 to 35 and back surface of teeth 39, 40 and 41, thus taking a wave-like shape with three bends in correspondence of the three teeth 39, 40 and 41.

Going on introducing the film, when the three holes 11 on leader portion 9 exceed the back surface of teeth 39, 40 and 41, the elasticity of film 4 makes it returning flat with teeth 39, 40 and 41 introduced into holes 11. The introduction step is thus terminated and a pull of film 4 is sufficient to make holes 11 to engage in throats 42 of teeth 39, 40 and 41 thus improving hooking. It is worth noticing that even if the introduction is not interrupted when teeth 39, 40 and 41 enter holes 11, nothing changes since the above said holes 11 inevitably engage in throats 42 as soon as film 4 is pulled.

It is also worth noticing that once film 4 has been hooked, it can no more be unhooked in any way from spool 3.

Once that leader portion 9 has been hooked, spool 2 is made to rotate to wind-up on itself the film 4 itself.

While film 4 is wound-up, leader portion 9 is stretched and folded on knife 29 thus resulting permanently deformed in a cross region 47, near the main portion 5 of film 4, in particular at a distance therefrom of no more than 5 mm, preferably than 2 mm. Region 47 of leader portion 9 results to be weakened by the folding on knife 29 and for this reason it will be called region of relative weakness, this term meaning a region where the natural tensile strength has been reduced in a predetermined way such as to obtain (as better explained hereinafter) a region of preferential breaking under tension.

In a cartridge realized according to the present invention, the hooking between film 4 and spool 3 has been seen to have a very high tensile strength, higher not only than the 89 N breaking point provided for by the already cited ANSI standards, but even than the 110 N point which assures the unoccurrence of such inconveniencies in any type of splicing machines.

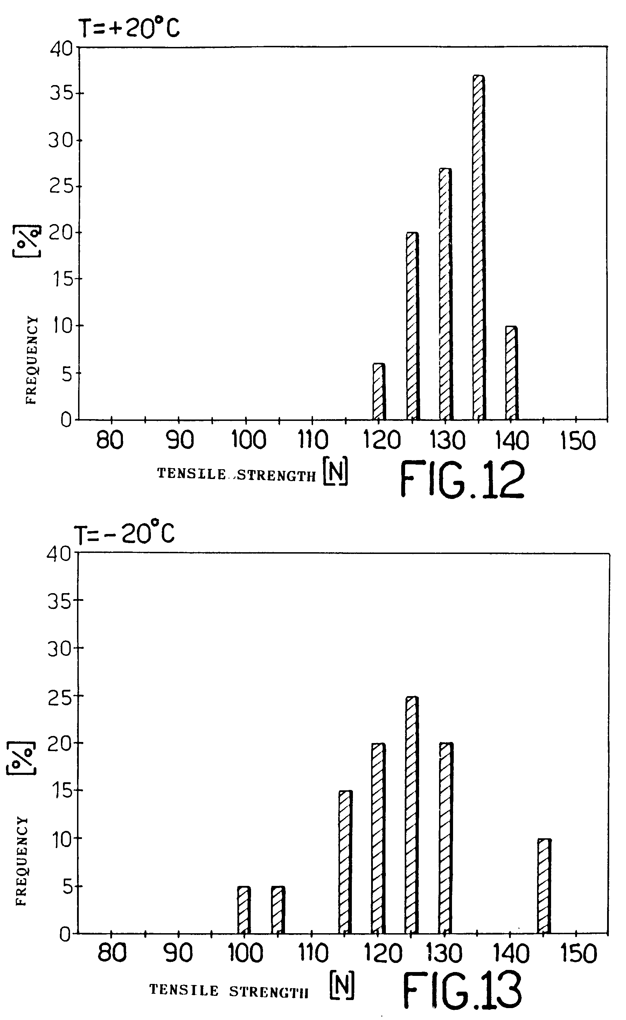

Figure 12 is a histogram showing the breaking frequency, checked at a room temperature of about +20°C. The most frequent value was seen to be 135 N, with a minimum point of 120 N. In all cases, breaking occurred in leader portion 9 in region 10 provided with holes 11, i.e. the weakness region provided in region 47 did not lower the breaking point.

The high tensile strength is due to the fact that region 10 in leader portion 9 is kept flat once hooked by elements from 31 to 35. In this way leader portion 9 itself is rendered capable of resisting tension in a way as much uniform as possible; in fact, if leader portion 9 bends under tension, stress concentrations occur thus lowering the total tensile strength.

The set of tests which allowed to make the histogram of Figure 12 was repeated at low temperature (about -20°C); even if such tests are not requested by ANSI standards, they are necessary since sometimes, although seldom, the films are under such conditions, e.g. in northern countries, where cartridges may be stored in the open air and placed into the splicing machine before they can properly get warmer.

Figure 13 is a histogram showing the breaking frequency, checked at a room temperature of about -20°C. The most frequent value was seen to be 125 N with a minimum point of 100 N. In all cases, breaking occurred in leader portion 9 in the relative weakness region 47. In this way, even the films which may break in the splicing machine do not give rise to any practical inconvenience (with the exception perhaps of an alarm signal), since the film which breaks spontaneously appears like a cut film, the leader portion 9 which remains attached thereto being very small. There is therefore no problem in the subsequent splicing with another film.

After all, the formation of region 47 of relative weakness makes somehow acceptable the any way undesired occurrence of the film breaking in the splicing machine.

The concept of forming a preferential breaking region in the film to avoid or at least limit the drawbacks due to a possible accidental breaking of the film itself in splicing machines is particularly advantageous if the film is fastened to the spool by hooking it thereto, since in this case the tensile strength is lower and therefore breaking more probable. However, of course, the present invention can be advantageously used also with any type of fastening, such as that made by means of adhesive tapes.

## Claims

1. A method for fastening, on a winding-up spool (3) in a cartridge (1), a photographic film (4) including a full-width main portion (5) and a reduced-width leader portion (9) formed at one end of the film (4), the method comprising the steps of:
- introducing the leader portion (9) into a longitudinal slit (25) formed in the spool (3),
- making an end region (10) of the leader portion (9) provided with hooking holes (11) to hook to hooking means (39, 40, 41) provided in the slit (25),
- winding up the film (4) on the spool (3),
characterized by producing a transversal region (47) of preferential breaking in the leader portion (9), near the main portion (5) of the film (4), wherein the tensile strength of the region (47) of preferential breaking is lower than that of the end region (10).

2. The method of claim 1, characterized in that the tensile strength of the region (47) of preferential breaking is lower than that of the end region (10) provided with hooking holes (11), at a room temperature in the range from -25° to -15° C.

3. The method of claim 2, characterized by the fact that, for producing the region (47) of preferential breaking, the leader portion (9), during winding-up of the film (4) on the spool (3), is stretched and folded on a knife (29) formed on an inlet mouth (28) of the slit (25) in the spool (3).

4. The method of claim 3, characterized in that said knife (29) comprises a folding portion (30) on which the leader portion (9) is folded, said folding portion (30) having, in cross section, a bending radius in the range from 0.15 to 0.50 mm.

5. The method of claim 1, characterized in that the leader portion (9), once hooked, is kept flat in the end region (10) provided with hooking holes (11) to improve the tensile strength in said end region (10).

6. A spool (3) for winding-up in a cartridge (1) a photographic film (4) including a full-width main portion (5) and a reduced-width leader portion (9) formed at one end of the film (4), the spool comprising a longitudinal slit (25) made in the spool (3) for inserting the leader portion (9), an inlet mouth (28) of the slit (25), hooking means (39, 40, 41) formed in the slit (25) to hook at an end region (10) of the leader portion (9) provided with hooking holes (11), guiding means (39, 40, 41, 43) formed in the slit (25) for guiding the leader portion (9) into the slit (25), characterized by means (29) for producing a transversal region (47) of preferential breaking in the leader portion (9), near the main portion (5) of the film (4), said means (29) for producing a transversal region (47) of preferential breaking comprising a knife (29) made on the inlet mouth (28) of the slit (25), said knife comprising a folding portion (30) having a bending radius in the range from 0.15 to 0.50 mm, on which folding portion (30) the leader portion (9) is stretched and folded while winding-up the film (4) on the spool (3).

7. The spool of claim 6, characterized by comprising in the slit (25) means (31 to 35) to keep flat the end region (10) of the leader portion (9) provided with hooking holes, once that it has been hooked.

8. The spool of claim 7, characterized by comprising in the slit (25):
- three identical teeth (39, 40, 41), of which two lateral ones (40, 41) are placed on a slit wall (27) and a central one (39) on the opposite wall (26), each tooth having a guiding back surface (43) tapered towards the inlet mouth (28) of the slit (25) and a hooking throat (42) in correspondence with a single hooking plane for the three teeth, said teeth constituting at the same time both the hooking means and the guiding means,
- at least three flat support elements (32, 34, 35), placed beneath the three teeth (39, 40, 41), tapered towards the inlet mouth (28) of the slit (25) and having a total axial extension equal to at least 60% the slit extension, said support elements constituting the means the keep flat the end region (10) of the leader portion (9) provided with hooking holes (11).

9. The spool of claim 8, characterized by comprising in the slit (25) two further flat support elements (31, 33), made on the wall (26) where there is the central tooth (39), in an external position with respect to the lateral teeth (40,41), the total axial extension of the support elements (31 to 35) being in the range from 75 to 85% the slit (25) extension.

10. The spool of claim 8, characterized in that the distance between the support elements (31, 32, 33) on one wall (26) and those (34, 35) on the other wall (27) is in the range from 120 to 180% the thickness of the photographic film (4).

11. A photographic cartridge (1) including a spool (3) as defined in any of claims 6 to 10, a casing element (2) and a photographic film (4) fastened to and wound-up on said spool (3), said film (4) comprising
- a full-width main portion (5),
- a reduced-width leader portion (9) formed at one end of the film (4),
- hooking holes (11) formed in an end portion (10) of the leader portion (9).

## Patentansprüche

1. Verfahren zur Befestigung eines fotografischen Films (4) mit einem Hauptabschnitt (5) in vollständiger Breite und einem Filmanfangsabschnitt (9) mit verringerter Breite, der an einem Ende des Films (4) ausgebildet ist, auf einer Aufwickelspule (3) in einer Kassette (1), wobei das Verfahren die Schritte aufweist:
- Einführen des Filmanfangsabschnitts (9) in einen in Längsrichtung verlaufenden Schlitz (25), der in der Spule (3) ausgebildet ist,
- Bewirken, daß ein mit Einhaklöchern (11) versehener Endbereich (10) des Filmanfangsabschnitts (9) einhakt in eine Einhakeinrichtung (39, 40, 41), die im Schlitz (25) vorgesehen ist,
- Aufwickeln des Films (4) auf die Spule (3),
dadurch gekennzeichnet, daß ein in Querrichtung verlaufender Sollrißbereich (47) im Filmanfangsabschnitt (9) erzeugt wird, und zwar in der Nähe des Hauptabschnitts (5) des Films (4), wobei die Zugfestigkeit des Sollrißbereichs (47) geringer ist als die des Endbereichs (10).

2. Verfahren nach Anspruch 1, gekennzeichnet dadurch, daß die Zugfestigkeit des Sollrißbereichs (47) bei einer Raumtemperatur im Bereich von -25°C bis -15°C geringer ist als die des Endbereichs (10), der mit Einhaklöchern (11) versehen ist.

3. Verfahren nach Anspruch 2, dadurch gekennzeichnet, daß zwecks Erzeugung des Sollrißbereichs (47) der Filmanfangsabschnitt (9) während des Aufwickelns das Films (4) auf die Spule (3) gestreckt und auf einem Messer (29), das an einer Einführungsöffnung (28) des Schlitzes (25) in der Spule (3) ausgebildet ist, geknickt wird.

4. Verfahren nach Anspruch 3, dadurch gekennzeichnet, daß das Messer (29) einen Knickabschnitt (30) aufweist, an dem der Filmanfangsabschnitt (9) geknickt wird, wobei der Knickabschnitt (30) im Querschnitt einen Biegeradius aufweist, der im Bereich von 0,15 bis 0,50 mm liegt.

5. Verfahren nach Anspruch 1, dadurch gekennzeichnet, daß der Filmanfangsabschnitt (9) nach dem Einhaken im Endbereich (10), der mit Einhaklöchern (11) versehen ist, flachgehalten wird, um die Zugfestigkeit in diesem Endbereich (10) zu verbessern.

6. Spule (3) zum Aufwickeln eines fotografischen Films (4) mit einem Hauptabschnitt (5) mit vollständiger Breite und einem Filmanfangsabschnitt (9) mit verringerter Breite, der an einem Ende des Films (4) angeordnet ist, in einer Kassette (1), wobei die Spule aufweist: einen in Längsrichtung verlaufenden Schlitz (25), der in der Spule (3) ausgebildet ist, zum Einführen des Filmanfangsabschnitts (9), eine Einführungsöffnung (28) des Schlitzes (25), eine Einhakeinrichtung (39, 40, 41), die im Schlitz (25) ausgebildet ist, zum Einhaken an einem Endbereich (10) des Filmanfangsabschnitts (9), der mit Einhaklöchern (11) versehen ist, einer Führungseinrichtung (39, 40, 41, 43), die im Schlitz (45) ausgebildet ist, zur Führung des Filmanfangsabschnitts (9) in den Schlitz (25), gekennzeichnet durch eine Einrichtung (29) zum Erzeugen eines in Querrichtung verlaufenden Sollrißbereichs (47) im Filmanfangsabschnitt (9) in der Nähe des Hauptabschnitts (5) des Films (4), wobei die Einrichtung (29) zur Erzeugung eines in Querrichtung verlaufenden Sollrißbereichs (47) ein Messer (29) aufweist, das auf der Einführungsöffnung (28) des Schlitzes (25) ausgebildet ist, wobei das Messer einen Knickabschnitt (30) mit einem Biegeradius im Bereich von 0,15 bis 0,50 mm aufweist, an welchem Knickabschnitt (30) der Filmenfangsabschnitt (9) gestreckt und gefaltet wird, während der Film (4) auf die Spule (3) aufgewickelt wird.

7. Spule nach Anspruch 6, gekennzeichnet durch eine im Schlitz (25) vorhandene Einrichtung (31 bis 35), um den mit Einhaklöchern versehenen Endbereich (10) des Filmanfangsabschnitts (9) flachzuhalten, nachdem er eingehakt worden ist.

8. Spule nach Anspruch 7, dadurch gekennzeichnet, daß in dem Schlitz (25) vorgesehen sind:
- drei identische Zähne (39, 40, 41), von denen zwei seitliche (40, 41) an einer Schlitzwand (27) und ein mittlerer (39) an der gegenüberliegenden Wand (26) angeordnet sind, wobei jeder Zahn eine Führungsrückseite (43) aufweist, die sich zur Einführungsöffnung (28) des Schlitzes (25) hin verjüngt und eine Einhakkehle (42), die einer einzigen Einhakebene für die drei Zähne entspricht, wobei die Zähne gleichzeitig sowohl die Einhakeinrichtung als auch die Führungseinrichtung darstellen,
- mindestens drei flache Auflageelemente (32, 34, 35), die unterhalb der drei Zähne (39, 40, 41) angeordnet sind, die sich zur Einführungsöffnung (28) des Schlitzes (25) hin verjüngen und eine axiale Gesamtausdehnung aufweisen, die mindestens 60% der Schlitzausdehnung beträgt, wobei die Auflageelemente die Einrichtung darstellen, die den mit Einhaklöchern (11) versehenen Endbereich (10) des Filmanfangsabschnitts (9) flachhält.

9. Spule nach Anspruch 8, dadurch gekennzeichnet, daß in dem Schlitz (25) vorgesehen sind: zwei weitere flache Auflageelemente (31, 33), die an der Wand (26) ausgebildet sind, wo sich der mittlere Zahn (39) befindet, und zwar in einer äußeren Position in bezug auf die seitlichen Zähne (40, 41), wobei die axiale Gesamtausdehnung dar Auflageelemente (31 bis 35) in dem Bereich zwischen 75 bis 85% der Ausdehnung des Schlitzes (25) beträgt.

10. Spule nach Anspruch 8, dadurch gekennzeichnet, daß die Entfernung zwischen den Auflageelementen (31, 32, 33) an der einen Wand (26) und denjenigen (34, 35) an der anderen Wand (27) im Bereich von 120 bis 180% der Dicke des fotografischen Films (4) liegt.

11. Fotografische Kassette (1) mit einer Spule (3) nach einen der Ansprüche 6 bis 10, einem Gehäuseelement (2) und einem fotografischen Film (4), der an der Spule (3) befestigt ist und auf sie aufgewickelt ist, wobei der Film (4) aufweist:
- einen Hauptabschnitt (5) mit vollständiger Breite,
- einen Filmanfangsabschnitt (9) mit verringerter Breite, der an einem Ende des Films (4) ausgebildet ist,
- Einhaklöcher (11), die in einem Endabschnitt (10) des Filmanfangsabschnitts (9) ausgebildet sind.

## Revendications

1. Procédé de fixation sur une bobine d'enroulement (3), dans une cartouche (1), d'un film photographique (4) comportant une partie principale (5) de pleine largeur et une partie d'amorce antérieure (9) de largeur réduite formée à une extrémité du film (4), le procédé comprenant :
- une introduction de la partie d'amorce antérieure (9) dans une fente longitudinale (25) façonnée dans la bobine (3),
- une réalisation d'une zone d'extrémité (10) de la partie d'amorce antérieure (9) munie de trous d'accrochage (11) à accrocher à des moyens d'accrochage (39, 40, 41) prévus dans la fente (25),
- un enroulement du film (4) sur la bobine (3),
caractérisé par une production d'une zone transversale (47) de casse préférentielle dans la partie d'amorce antérieure (9), à proximité de la partie principale (5) du film (4), la résistance à la rupture de la zone (47) de casse préférentielle étant inférieure à celle de la zone d'extrémité (10).

2. Procédé suivant la revendication 1, caractérisé en ce que la résistance à la rupture de la zone (47) de casse préférentielle est inférieure à celle de la zone d'extrémité (10) munie de trous d'accrochage (11), à une température de salle dans la plage entre -25° et -15°C.

3. Procédé suivant la revendication 2, caractérisé en ce que pour produire la zone (47) de casse préférentielle, la partie d'amorce antérieure (9), pendant l'enroulement du film (4) sur la bobine (3), est tendue et pliée sur un couteau (29) formé sur un orifice d'entrée (28) de la fente (25) de la bobine (3).

4. Procédé suivant la revendication 3, caractérisé en ce que le couteau (29) comprend une partie de pliage (30) sur laquelle la partie d'amorce antérieure (9) est pliée, la partie de pliage (30) présentant, en section transversale, un rayon de courbure dans la plage entre 0,15 et 0,50 mm.

5. Procédé suivant la revendication 1, caractérisé en ce que la partie d'amorce antérieure (9), une fois accrochée, est maintenue à plat dans la zone d'extrémité (10) munie de trous d'accrochage (11), afin d'améliorer la résistance à la rupture de la zone d'extrémité susdite (10).

6. Bobine (3) pour l'enroulement dans une cartouche (1) d'un film photographique (4) comportant une partie principale (5) de pleine largeur et une partie d'amorce antérieure (9), de largeur réduite, formée à une extrémité du film (4), la bobine comprenant une fente longitudinale (25) réalisée dans la bobine (3) pour l'insertion de la partie d'amorce antérieure (9), un orifice d'entrée (28) de la fente (25), des moyens d'accrochage (39, 40, 41) formés dans la fente (25) pour s'accrocher à une zone d'extrémité (10) de la partie d'amorce antérieure (9) munie de trous d'accrochage (11), des moyens de guidage (39, 40, 41, 43) formés dans la fente (25) pour guider la partie d'amorce antérieure (9) dans la fente (25), caractérisée par des moyens (29) destinés à produire une zone transversale (47) de casse préférentielle dans la partie d'amorce antérieure (9) à proximité de la partie principale (5) du film (4), les moyens (29) de production d'une zone transversale (47) de casse préférentielle comprenant un couteau (29) réalisé dans l'orifice d'entrée (28) de la fente (25), le couteau comprenant une partie de pliage (30) qui présente une rayon de courbure dans la plage entre 0,15 et 0,50 mm, la partie d'amorce antérieure (9) étant tendue et pliée sur cette partie de pliage (30) alors que le film (4) est enroulé sur la bobine (3).

7. Bobine suivant la revendication 6, caractérisée en ce qu'elle comprend dans la fente (25) des moyens (31 à 35) pour maintenir à plat la zone d'extrémité (10) de la partie d'amorce antérieure (9) munie de trous d'accrochage, dès qu'elle a été accrochée.

8. Bobine suivant la revendication 7, caractérisée en ce qu'elle comprend dans la fente (25) :
- trois dents identiques (39, 40, 41) dont deux latérales (40, 41) sont placées sur une paroi (27) de la fente et dont une centrale (39) est placée sur la paroi opposée (26), chaque dent présentant une surface arrière de guidage (43), chanfreinée en direction de l'orifice d'entrée (28) de la fente (25), et un col d'accrochage (42) en correspondance avec un unique plan d'accrochage pour les trois dents, les dents constituant en même tant les moyens d'accrochage que les moyens de guidage,
- au moins trois éléments porteurs plats (32, 34, 35), placés en dessous des trois dents (39, 40, 41), chanfreinés en direction de l'orifice d'entrée (28) de la fente (25) et présentant une extension axiale totale égale à au moins 60 % de l'extension de la fente, les éléments porteurs constituant les moyens pour maintenir à plat la zone d'extrémité (10) de la partie d'amorce antérieure (9) munie de trous d'accrochage (11).

9. Bobine suivant la revendication 8, caractérisée en ce qu'elle comprend dans la fente (25) deux autres éléments porteurs plats (31, 33), réalisés sur la paroi (26) où il y a la dent centrale (39), dans une position externe par rapport aux dents latérales (40, 41), l'extension axiale totale des éléments porteurs (31 à 35) étant dans la plage entre 75 et 85 % de l'extension de la fente (25).

10. Bobine suivant la revendication 8, caractérisée en ce que la distance entre les éléments porteurs (31, 32, 33) sur une paroi (26) et ceux (34, 35) sur l'autre paroi (27) est dans la plage entre 120 et 180 % de l'épaisseur du film photographique (4).

11. Cartouche photographique (1) comportant une bobine (3) telle que définie dans l'une quelconque des revendications 6 à 10, un élément d'enveloppe (2) et un film photographique (4) fixé à et enroulé sur la bobine (3), le film (4) comprenant :
- une partie principale (5) de pleine largeur,
- une partie d'amorce antérieure (9), de largeur réduite, formée à une extrémité du film (4), et
- des trous d'accrochage (22) formés dans une partie d'extrémité (10) de la partie d'amorce antérieure (9).
